# EUROPÄISCHE PATENTSCHRIFT

(11) **EP 2 876 236 B1**
(45) Veröffentlichungstag und Bekanntmachung des Hinweises auf die Patenterteilung: **12.07.2017**
(21) Anmeldenummer: 14192990.1
(22) Anmeldetag: 13.11.2014
(51) Int. Cl.: E05C 9/00, E05B 15/16

(54) **Riegelstange für einen Riegelstangenbeschlag**
Locking bar for a locking bar fitting
Barre de verrouillage pour une crémone

(30) Priorität: 20.11.2013 DE 202013105256 U
(43) Veröffentlichungstag der Anmeldung: 27.05.2015
(73) Patentinhaber: SCHÜCO International KG, 33609 Bielefeld (DE)
(72) Erfinder: Niemeier, Oliver, 32139 Spenge (DE); Diekmann, Bernd, 33790 Halle/Westf. (DE)
(74) Vertreter: Dantz, Jan Henning

(56) Entgegenhaltungen:
- WO-A1-2004/007878
- DE-A1- 19 709 283
- FR-A1- 2 938 866
- GB-A- 2 384 816

## Beschreibung

Die vorliegende Erfindung betrifft eine Riegelstange für einen Riegelstangenbeschlag, mit einem aus Kunststoff gefertigten und in eine hinterschnittene Nut eines Flügelrahmens eines Fensters oder einer Tür in Längsrichtung verschiebbar einsetzbaren und mit einem Getriebe verbindbaren Grundprofil.

Riegelstangen der vorerwähnten Art sind in vielerlei Ausführungsformen bekannt und weisen in funktioneller Hinsicht Schließelemente auf, denen blendrahmenseitige Gegenstücke zugeordnet sind, so dass durch Verschieben und das Zusammenwirken der Schließelemente und der entsprechenden Gegenstücke Öffnungs- oder Schließstellungen einer Tür oder eines Fensters bewirkt werden können.

Aus der DE 197 09 283 A1 ist eine Riegelstange geformt aus einem relativ dünnen Streifenmaterial bekannt und die GB 2 384 816 offenbart eine Riegelstange aus Kunststoff.

Der vorliegenden Erfindung liegt die Aufgabe zugrunde, eine Riegelstange der gattungsgemäßen Art dahingehend zu verbessern, dass die mechanische Belastbarkeit insbesondere gegenüber Schub- und Zugkräften verbessert und die Einbruchssicherheit erhöht wird.

Diese Aufgabe wird erfindungsgemäß dadurch gelöst, dass das Grundprofil durch eine Metallschiene verstärkt und dass die Metallschiene gemeinsam mit dem Grundprofil mit dem Getriebe verbindbar ist durch mindestens einen Verbindungszapfen, welcher das Grundprofil und die Metallschiene im Bereich von einer beide Bauteile durchdringenden Durchbrechung durchtritt.

Das Grundprofil wird durch die Metallschiene mechanisch bedeutend verstärkt, so dass die erfindungsgemäße Riegelstange durch den ausschließlichen Kontakt des Grundprofils aus Kunststoff mit den Führungsbereichen der hinterschnittenen Nut eines Flügelrahmens die guten Gleiteigenschaften beim Verschieben durch ein Getriebe behält und dass gleichzeitig eine verbesserte Kraftübertragung und höhere Belastbarkeit erreicht wird durch die Verwendung der zusätzlichen Metallschiene.

Die Metallschiene kann auf das Grundprofil aufgeklipst sein, ebenso besteht die Möglichkeit, dass das Grundprofil und die Metallschiene im Koextrusionsverfahren hergestellt und somit miteinander verbunden sind. Auch eine Verklebung von Grundprofil und Metallschiene ist möglich. Nach einem weiteren Gedanken der Erfindung kann die Metallschiene aus Aluminium bestehen.

Die aus Aluminium hergestellte Metallschiene kann ohne weiteres eloxiert oder zumindest auf ihrer Sichtseite lackiert oder mit einer Farbfolie beklebt sein.

Hierdurch wird eine optische Verbesserung der Riegelstange, die bei geöffneter Tür oder geöffnetem Fenster durchaus sichtbar ist, erzielt.

Gleiches gilt dann, wenn die Metallschiene aus Edelstahl hergestellt ist.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben. Es zeigen:
- Figur 1: eine perspektivische Darstellung einer erfindungsgemäßen Riegelstange
- Figur 2: die in Figur 1 mit II bezeichnete Einzelheit in vergrößerter Darstellung
- Figur 3: eine Stirnansicht eines Flügelrahmens einer Tür oder eines Fensters mit eingesetzter Riegelstange
- Figur 4: eine vergrößerte Darstellung der in Figur 3 mit IV bezeichneten Einzelheit, gezeigt mit einer erfindungsgemäßen Riegelstange vor und nach dem Einsetzen in den Flügelrahmen
- Figur 5: eine Stirnansicht einer Riegelstange nach einem weiteren Ausführungsbeispiel der Erfindung
- Figur 6: eine Stirnansicht einer weiteren Riegelstange gemäß vorliegender Erfindung
- Figur 7: eine Stirnansicht einer weiteren erfindungsgemäßen Riegelstange, gezeigt vor und nach der Verbindung einer Metallschiene mit einem aus Kunststoff gefertigten Grundprofil.

In den beigefügten Zeichnungen ist mit dem Bezugszeichen 1 generell eine Riegelstange für einen nicht weiter dargestellten Riegelstangenbeschlag bezeichnet, die erfindungsgemäß aus einem aus Kunststoff gefertigten Grundprofil 2 und einer das Grundprofil 2 verstärkenden Metallschiene 3 besteht.

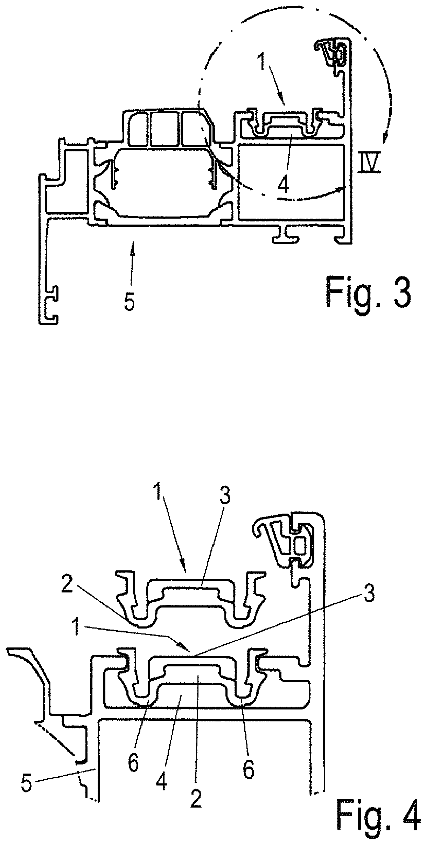

Das Grundprofil 2 ist derart ausgebildet, dass es in eine hinterschnittene Nut 4 eines Flügelrahmenprofils 5 einer Tür oder eines Fensters (nicht weiter dargestellt) eingebracht werden kann und nach dem Einbringen in diese hinterschnittene Nut 4 nur noch in Längsrichtung verschoben werden kann. Dies zeigt z.B. Figur 4 besonders deutlich.

Aus Figur 4 geht ebenfalls deutlich hervor, dass das Grundprofil 2 auf dem Nutgrund der hinterschnittenen Nut 4 sich abstützende Stege 6 aufweist. Die Dimensionierung des Grundprofils 2 und dessen Formgebung sind bevorzugt so ausgelegt, dass die Riegelstange 1 insgesamt nahezu spielfrei in die hinterschnittene Nut 4 einsetzbar ist.

Somit kann die Riegelstange 1 präzise in Längsrichtung innerhalb der hinterschnittenen Nut 4 geführt werden.

Wie die Zeichnungen weiterhin zeigen, ist die Riegelstange 1 in ihren stirnseitigen Endbereichen mit Durchbrechungen 7 versehen, welche sowohl das Grundprofil 2 wie auch die Metallschiene 3 durchtreten und zur Aufnahme von nicht gezeigten Verbindungszapfen bestimmt sind, mittels derer die Riegelstange 1 zumindest an einem stirnseitigen Endbereich mit einem Getriebe verbindbar ist, mittels dessen die Riegelstange 1 innerhalb der hinterschnittenen Nut 4 in Längsrichtung verschoben werden kann.

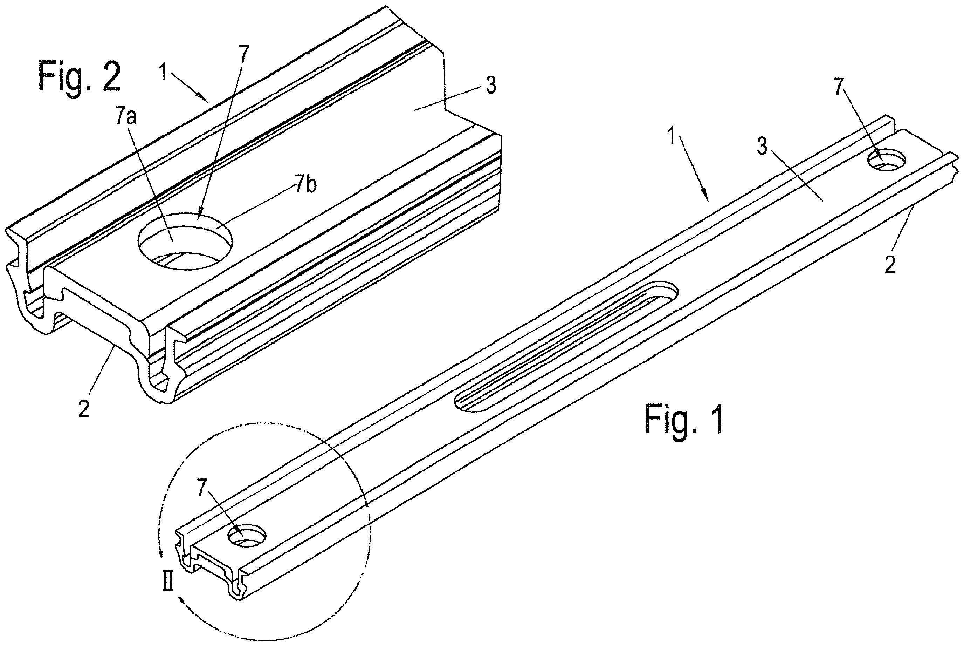

Im dargestellten Ausführungsbeispiel nach den Figuren 1-4 ist die Durchbrechung 7 durch das Grundprofil 2 und die Metallschiene 3 in Form einer Bohrung ausgeführt. Dementsprechend wird dann auch ein im Querschnitt runder Verbindungszapfen verwendet.

Derartige Getriebe zur Betätigung von Riegelstangen sind hinlänglich bekannt und aus diesem Grunde in den beigefügten Zeichnungen nicht weiter dargestellt.

Durch die Wandungen 7a und 7b der Durchbrechung 7 und den eingesetzten Verbindungszapfen werden die Materialeigenschaften der Metallschiene 3 - zugfest und plastisch verformbar - mit denen des Grundprofiles 2 - geringere Zugfestigkeit und elastisch zurückfedernd - kombiniert. Dadurch erfolgt bei einem Einbruchsversuch durch übermäßige Zugkräfte in Bewegungsrichtung der Riegelstange 1 eine Streckung der Metallschiene 3, während sich das Grundprofil 2 nach der Zugkraftentlastung wieder zurückzieht. Dadurch kommt es zu einem Verkeilungseffekt in der Durchbrechung 7, der sich so auf den gesamten Beschlag überträgt und ihn zum Öffnen unbrauchbar macht und verschlossen bleibt.

Bedingt dadurch, dass entsprechende Verbindungszapfen sowohl das Grundprofil 2 wie auch die das Grundprofil 2 verstärkende Metallschiene 3 durchtreten, ergibt sich für die Riegelstange 1 insgesamt eine hohe mechanische Belastbarkeit in Bezug auf Zug- wie auch auf Druckkräfte, wie sie beim Betätigen einer Riegelstange 1 durch ein Getriebe entstehen können. Dabei werden die Kräfte vorzugsweise über die Metallschiene 3 übertragen.

Durch die Verstärkung der Riegelstange 1 durch die Metallschiene 3 wird auch die mechanische Festigkeit der Riegelstange 1 insgesamt erhöht und somit eine größere Einbruchssicherheit erzielt, da es für einen Einbrecher schwieriger wird, eine entsprechend verstärkte Riegelstange 1 gewaltsam aus der hinterschnittenen Nut 4 herauszuhebeln.

Beim Ausführungsbeispiel nach den Figuren 1-4 ist die Metallschiene 3 im Wesentlichen mit einem U-förmigen Querschnitt versehen und auf den mittleren Bereich des Grundprofils 2 aufgeklemmt.

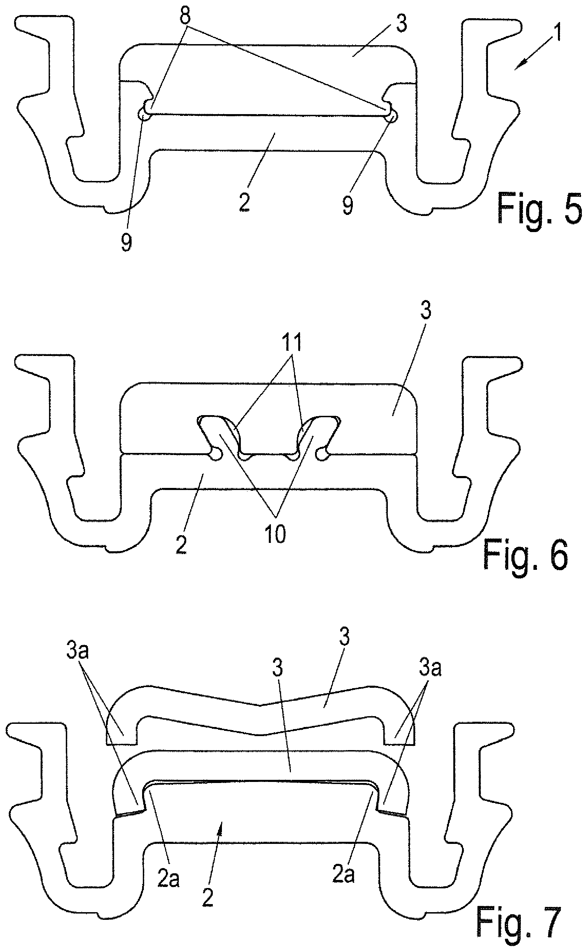

Beim Ausführungsbeispiel nach Figur 5 ist die Metallschiene 3 an ihren unteren, seitlichen Rändern mit Raststegen 8 ausgestattet, welche in dafür vorgesehene Hinterschneidungen 9 des Grundprofils 2 einrastbar sind. Hierdurch ergibt sich eine gute Fixierung der Metallschiene 3 auf dem Grundprofil 2.

Gleiches gilt für das Ausführungsbeispiel nach Figur 6, bei dem das Grundprofil 2 in Richtung der Metallschiene 3 vorstehende und V-förmig zueinander verlaufende Ankerstege 10 aufweist, welche in entsprechend ausgeschnittene Längsrillen 11 der Metallschiene 3 eingreifen und so eine gute Verbindung zwischen Grundprofil 2 und Metallschiene 3 gewährleisten.

Bei den Ausführungsbeispielen nach den Figuren 5 und 6 handelt es sich gewissermaßen um eine Klipsverbindung zwischen dem Grundprofil 2 und der Metallschiene 3.

Die Ausführungsform nach Figur 7 ähnelt dem Ausführungsbeispiel nach Figuren 1-4 mit dem Unterschied, dass beim Ausführungsbeispiel nach Figur 7 die Metallschiene 3 um ihre Mittellängsachse geringfügig von dem Grundprofil 2 wegweisend verformt ist, so dass seitliche Haltestege 3a der Metallschiene 3 über die äußeren Begrenzungskanten 2a von hinterschnittenen Abschnitten des Grundprofils 2 hinweg aufgesetzt werden können und anschließend durch Herunterdrücken der zunächst vom Grundprofil 2 wegweisenden Abschnitte der Metallschiene 3 an diesen hinterschnittenen Abschnitten des Grundprofils 2 verrasten.

Die Ausführungsbeispiele nach den Figuren 5-7 sollen ebenso wie das Ausführungsbeispiel nach Figur 1 lediglich zeigen, dass es viele Möglichkeiten gibt, die Metallschiene 3 mit dem Grundprofil 2 zumindest in der Art zu verbinden, dass sich eine nahezu spielfreie und damit auch im Betrieb nicht zu Geräuschbildungen neigende Verbindung ergibt.

Alternativ zu den dargestellten Ausführungsbeispielen ist es auch möglich, Grundprofil 2 und Metallschiene 3 im Koextrusionsverfahren herzustellen und somit miteinander zu verbinden.

Auch eine Verklebung der Metallschiene 3 auf dem Grundprofil 2 ist denkbar.

Die Metallschiene 3 ist nach einem bevorzugten Ausführungsbeispiel aus Aluminium hergestellt. Dabei ist es aus gestalterischen Gründen möglich, eine eloxierte Ausführungsform zu wählen, um durch verschiedene Farbgebungen der Metallschiene 3 eine optische Anpassung an die Gestaltung des Flügelrahmens 5 herbeizuführen.

Ebenso ist es denkbar, eine aus Aluminium hergestellte Metallschiene 3 zumindest in ihrem Sichtbereich mit einer gewünschten Lackierung oder Farbfolie zu versehen.

Eine optisch hochwertige Ausführungsform ergibt sich auch dann, wenn die Metallschiene 3 aus Edelstahl hergestellt ist.

Insgesamt bietet, wie vorstehend dargelegt, eine erfindungsgemäße Riegelstange 1 eine große Anzahl von praktischen Vorteilen und darüber hinaus auch noch die Möglichkeit, den im Öffnungszustand sichtbaren Bereich eines Flügelrahmens, in dem eine derartige Riegelstange 1 angeordnet ist, optisch ansprechend zu gestalten.

### Bezugszeichenliste

- 1: Riegelstange
- 2: Grundprofil
- 2a: Begrenzungskante
- 3: Metallschiene
- 3a: Haltesteg
- 4: hinterschnittene Nut
- 5: Flügelrahmenprofil
- 6: Steg
- 7: Durchbrechung
- 7a: Wandung
- 7b: Wandung
- 8: Raststeg
- 9: Hinterschneidung
- 10: Ankersteg
- 11: Längsrille

## Patentansprüche

1. Riegelstange (1) für einen Riegelstangenbeschlag, mit einem aus Kunststoff gefertigten und in eine hinterschnittene Nut (4) eines Flügelrahmens (5) eines Fensters oder einer Tür in Längsrichtung verschiebbar einsetzbaren und mit einem Getriebe verbindbaren Grundprofil (2), **dadurch gekennzeichnet, dass** das Grundprofil (2) durch eine Metallschiene (3) verstärkt und dass die Metallschiene (3) gemeinsam mit dem Grundprofil (2) mit dem Getriebe verbindbar ist durch mindestens einen Verbindungszapfen, welcher das Grundprofil (2) und die Metallschiene (3) im Bereich von einer beide Bauteile (2, 3) durchdringenden Durchbrechung (7) durchtritt.

2. Riegelstange nach Anspruch 1, **dadurch gekennzeichnet, dass** die Metallschiene (3) auf das Grundprofil (2) aufgeklipst ist.

3. Riegelstange nach Anspruch 1, **dadurch gekennzeichnet, dass** das Grundprofil (2) und die Metallschiene (3) im Koextrusionsverfahren hergestellt und somit miteinander verbunden sind.

4. Riegelstange nach Anspruch 1, **dadurch gekennzeichnet, dass** die Metallschiene (3) durch Verklebung mit dem Grundprofil (2) verbunden ist.

5. Riegelstange nach einem der vorhergehenden Ansprüche, **dadurch gekennzeichnet, dass** die Metallschiene (3) aus Aluminium besteht.

6. Riegelstange nach einem der Ansprüche 1-4, **dadurch gekennzeichnet, dass** die Metallschiene (3) aus Edelstahl hergestellt ist.

7. Riegelstange nach Anspruch 5, **dadurch gekennzeichnet, dass** die Metallschiene (3) aus eloxiertem Aluminium besteht.

8. Riegelstange nach Anspruch 5, **dadurch gekennzeichnet, dass** die aus Aluminium hergestellte Metallschiene (3) zumindest auf ihrer Sichtseite lackiert ist.

9. Riegelstange nach Anspruch 5, **dadurch gekennzeichnet, dass** zumindest auf die Sichtseite der Metallschiene (3) eine Farbfolie aufgebracht ist.

10. Riegelstange nach einem der vorhergehenden Ansprüche, **dadurch gekennzeichnet, dass** das Grundprofil (2) in eine hinterschnittene Nut (4) eines Flügelrahmens (5) einklipsbar ist.

11. Riegelstange nach einem der vorhergehenden Ansprüche, **dadurch gekennzeichnet, dass** das Grundprofil (2) auf dem Nutgrund der hinterschnittenen Nut (4) abstützbare Stege (6) aufweist.

12. Riegelstange nach einem der vorhergehenden Ansprüche, **dadurch gekennzeichnet, dass** das Grundprofil (2) in der hinterschnittenen Nut (4) geführt ist.

## Claims

1. A locking bar (1) for a locking bar fitting, having a main profile (2), which is manufactured from plastic and is insertable so it is displaceable in an undercut groove (4) of a sash (5) of a window or a door in the longitudinal direction and is connectable to a gearing, **characterized in that** the main profile (2) is reinforced by a metal rail (3), and the metal rail (3) is connectable to the gearing jointly with the main profile (2) by at least one connecting pin, which passes through the main profile (2) and the metal rail (3) in the region of a passage (7) which penetrates both components (2, 3).

2. The locking bar according to Claim 1, **characterized in that** the metal rail (3) is clipped onto the main profile (2).

3. The locking bar according to Claim 1, **characterized in that** the main profile (2) and the metal rail (3) are produced in the coextrusion method and therefore connected to one another.

4. The locking bar according to Claim 1, **characterized in that** the metal rail (3) is connected to the main profile (2) by adhesive bonding.

5. The locking bar according to any one of the preceding claims, **characterized in that** the metal rail (3) consists of aluminum.

6. The locking bar according to any one of Claims 1 to 4, **characterized in that** the metal rail (3) is produced from stainless steel.

7. The locking bar according to Claim 5, **characterized in that** the metal rail (3) consists of anodized aluminum.

8. The locking bar according to Claim 5, **characterized in that** the metal rail (3) produced from aluminum is lacquered at least on the visible side thereof.

9. The locking bar according to Claim 5, **characterized in that** a colored film is applied at least on the visible side of the metal rail (3).

10. The locking bar according to any one of the preceding claims, **characterized in that** the main profile (2) can be clipped into an undercut groove (4) of a sash (5).

11. The locking bar according to any one of the preceding claims, **characterized in that** the main profile (2) has webs (6) supportable on the groove base of the undercut groove (4).

12. The locking bar according to any one of the preceding claims, **characterized in that** the main profile (2) is guided in the undercut groove (4).

## Revendications

1. Barre de verrouillage (1) destinée à une crémone comprenant un profilé de base (2) réalisé en matériau synthétique, pouvant être inséré de façon à pouvoir coulisser en direction longitudinale dans une rainure en contre-dépouille (4) d'un vantail (5) d'une fenêtre ou d'une porte, et pouvant être relié à une transmission,
**caractérisée en ce que**
le profilé de base (2) est renforcé par un rail métallique (3) et, le rail métallique (3) peut être relié, avec le profilé de base (2) à la transmission par au moins un tourillon de liaison qui passe au travers du profilé de base (2) et du rail métallique (3) dans la zone d'un évidement (7) pénétrant dans ces deux éléments (2, 3).

2. Barre de verrouillage conforme à la revendication 1,
**caractérisée en ce que**
le rail métallique (3) est enclipsé sur le profilé de base (2).

3. Barre de verrouillage conforme à la revendication 1,
**caractérisée en ce que**
le profilé de base (2) et le rail métallique (3) sont fabriqués par un procédé de co-extrusion et sont ainsi reliés l'un à l'autre.

4. Barre de verrouillage conforme à la revendication 1,
**caractérisée en ce que**
le rail métallique (3) est relié au profilé de base (2) par collage.

5. Barre de verrouillage conforme à l'une des revendications précédentes,
**caractérisée en ce que**
le rail métallique (3) est réalisé en aluminium.

6. Barre de verrouillage conforme à l'une des revendications 1 à 4,
**caractérisée en ce que**
le rail métallique (3) est réalisé en un acier spécial.

7. Barre de verrouillage conforme à la revendication 5,
**caractérisée en ce que**
le rail métallique (3) est réalisé en aluminium anodisé.

8. Barre de verrouillage conforme à la revendication 5,
**caractérisée en ce que**
le rail métallique (3) réalisé en aluminium est laqué au moins sur sa face visible.

9. Barre de verrouillage conforme à la revendication 5,
**caractérisée en ce qu'**
un film coloré est appliqué au moins sur la face visible du rail métallique (3).

10. Barre de verrouillage conforme à l'une des revendications précédentes,
**caractérisée en ce que**
le profilé de base (2) peut être enclipsé dans une rainure en contre-dépouille (4) d'un vantail (5).

11. Barre de verrouillage conforme à l'une des revendications précédentes,
**caractérisée en ce que**
le profilé de base (2) comporte une baquette (6) pouvant s'appuyer sur le fond de la rainure en contre-dépouille (4).

12. Barre de verrouillage conforme à l'une des revendications précédentes,
**caractérisée en ce que**
le profilé de base (2) est guidé dans la rainure en contre-dépouille (4).
